# EUROPÄISCHE PATENTSCHRIFT

(11) **EP 1 086 778 B1**
(45) Veröffentlichungstag und Bekanntmachung des Hinweises auf die Patenterteilung: **03.12.2003**
(21) Anmeldenummer: 00120550.9
(22) Anmeldetag: 20.09.2000
(51) Int. Cl.: B23K 37/00

(54) **Verfahren zum Verbessern der Schweissbarkeit von Magnesium-Legierungen**
Process for improving weldability of magnesium-alloys
Procédé pour améliorer la soudabilité d'alliages à base de magnésium

(30) Priorität: 22.09.1999 DE 19945460
(43) Veröffentlichungstag der Anmeldung: 28.03.2001
(73) Patentinhaber: Linde AG, 65189 Wiesbaden (DE)
(72) Erfinder: Danzer, Wolfgang, Dr. Dipl.-Chem., 84405 Dorfen (DE)
(74) Vertreter: Kasseckert, Rainer

(56) Entgegenhaltungen:
- GB-A- 463 434
- US-A- 4 078 712

## Beschreibung

Die Erfindung betrifft ein Verfahren zum Schweißen von Werkstücken aus Magnesium-Legierungen.

Im Fahrzeugbau kommen zunehmend leichte Materialien, wie z.B. Aluminium und Magnesium, zum Einsatz. Eine umfassende Verwendung dieser Werkstoffe ist nur möglich, wenn eine geeignete Schweißtechnik zur Verfügung steht, wie das bei Aluminium der Fall ist. Werkstücke aus Magnesium werden heute geschraubt und geklebt, da die Herstellung sicherer Schweißverbindungen in der Serienproduktion noch nicht zum Stand der Technik gehört.

In "ASM Handbuch Magnesium" Auflage Mai 1999 wird in Anlage 1, Bild 59 ein Querschnitt durch eine Schweißnaht mit beim Schweißen gebildeten Poren gezeigt Als Ursache für die Porenbildung werden schmutziges Grundmaterial, schmutziger Fülldraht, schlechte Schutzgasabdeckung und feuchtes Schutzgas genannt

Aufgabe der Erfindung ist es, die genannte Porenbildung an Schweißnähten zu vermeiden.

Die Aufgabe wird gelöst durch ein Verfahren mit den Merkmalen des Anspruchs 1. Ausgestaltungen der Erfindung sind Gegenstand von Unteransprüchen.

Kennzeichnend an dem erfindungsgemäßen Verfahren zum Schweißen von Werkstücken aus Magnesium-Legierungen ist, daß die Werkstücke vor dem eigentlichen Schweißvorgang einer Wärmebehandlung unter Schutzgas unterzogen werden.

Schweißversuche haben nämlich ergeben, daß eine Beachtung der allgemeinen Schweißregeln, z.B. nur sauberes Material einzusetzen und eine gute Schutzgasabdeckung mit trockenem Schutzgas zu gewährleisten, nicht ausreicht, um die Porenbildung zu verhindern. Insbesondere bei Magnesium-Druckgußlegierungen haben sich trotzdem Poren gebildet. Weiterführende Untersuchungen haben überraschend gezeigt, daß die Porenbildung auf bereits im Grundwerkstoff vorliegendes Magnesiumhydrid zurückzuführen ist, das beim Schweißen Wasserstoff freisetzt. Erst die Wärmebehandlung vor dem Schweißen, die als Wasserstofffreiglühen bezeichnet werden kann, hat porenfreie Schweißnähte ergeben.

Bei einer Ausgestaltung des erfindungsgemäßen Verfahrens können Werkstücke aus einer Magnesium-Knetlegierung oder aus einer Magnesium-Gußlegierung wärmebehandelt werden. Insbesondere können mit Vorteil Werkstücke aus einer Magnesium-Druckgußlegierung wärmebehandelt werden. Die Bildung von Magnesiumhydrid im Werkstoff ist hier besonders stark ausgebildet und leicht verständlich zu machen:

Beim Magnesium-Druckgußverfahren wird Magnesium flüssig unter hohem Druck in Formen gepreßt Damit sich das Magnesiumwerkstück nach dem Erkalten leicht aus der Form entnehmen läßt, wird vor dem Einfüllen des Magnesiums in die Form eine wässrige Emulsion von Kohlenwasserstoffen auf die etwa 200°C heiße Oberfläche der Form gespritzt. Das Wasser verdampft und die Kohlenwasserstoffe verbleiben in einer dünnen Schicht als Trennmittel auf der Form. Beim Eindrücken des heißen Magnesiums zersetzen sich die Kohlenwasserstoffe, der Wasserstoff wird frei und reagiert mit Magnesium zu Magnesiumhydrid, das ohne die erfindungsgemäße Wärmebehandlung vor dem eigentlichen Schweißvorgang dann beim Schweißen die Poren bildet

Die Wärmebehandlung kann bei einer Temperatur zwischen 350 und 600°C durchgeführt werden. Besonders geeignet sind Temperaturen zwischen 400 und 550°C; die Wärmebehandlung kann dann in einem Zeitraum von 5 bis 24 Stunden vorgenommen werden. Das Magnesiumhydrid zersetzt sich ab 300°C in Magnesium und Wasserstoff. Der dabei freigesetzte Wasserstoff diffundiert bei der Wärmebehandlung aus dem Werkstoff heraus, und zwar um so schneller je höher die Temperatur bei der Wärmebehandlung gewählt wird.

Als das Schutzgas für die Wärmebehandlung kann mit Vorteil ein Inertgas mit einer oder mehreren der Komponenten Argon, Helium, Stickstoff und Kohlendioxid verwendet werden.

## Patentansprüche

1. Verfahren zum Schweißen von Werkstücken aus Magnesium-Legierungen, **dadurch gekennzeichnet, daß** die Werkstücke vor dem eigentlichen Schweißvorgang einer Wärmebehandlung unter Schutzgas unterzogen werden, um in den Werstücken vorliegendes Magnesiumhybrid in Magnesium und Wasserstoff zuzersetzen und den Wasserstoff freizusetzen.

2. Verfahren nach Anspruch 1, **dadurch gekennzeichnet, daß** Werkstücke aus einer Magnesium-Knetlegierung oder aus einer Magnesium-Gußlegierung wärmebehandelt werden.

3. Verfahren nach Anspruch 1 oder 2, **dadurch gekennzeichnet, daß** Werkstücke aus einer Magnesium-Druckgußlegierung wärmebehandelt werden.

4. Verfahren nach einem der Ansprüche 1 bis 3, **gekennzeichnet durch** die Wärmebehandlung bei einer Temperatur zwischen 350 und 600°C durchgeführt wird.

5. Verfahren nach einem der Ansprüche 1 bis 3, **dadurch gekennzeichnet, daß** die Wärmebehandlung bei einer Temperatur zwischen 400 und 550°C durchgeführt wird.

6. Verfahren nach Anspruch 5, **dadurch gekennzeichnet, daß** die Wärmebehandlung in einem Zeitraum von 5 bis 25 Stunden vorgenommen wird.

7. Verfahren nach einem derAnsprüche 1 bis 6, **dadurch gekennzeichnet, daß** als das Schutzgas für die Wärmebehandlung ein Inertgas mit einer oder mehreren der Komponenten Argon, Helium, Stickstoff und Kohlendioxid verwendet wird.

## Claims

1. Process for welding workpieces made from magnesium alloys, **characterized in that** the workpieces, prior to the actual welding operation, are subjected to a heat treatment under shielding gas in order to breakdown magnesium hydride which is present in the workpiece into magnesium and hydrogen and to release the hydrogen.

2. Process according to Claim 1, **characterized in that** workpieces made from a wrought magnesium alloy or from a cast magnesium alloy are heat-treated.

3. Process according to Claim 1 or 2, **characterized in that** workpieces made from a die-cast magnesium alloy are heat-treated.

4. Process according to one of Claims 1 to 3, **characterized by** the heat treatment being carried out at a temperature of between 350 and 600°C.

5. Process according to one of Claims 1 to 3, **characterized in that** the heat treatment is carried out at a temperature of between 400 and 550°C.

6. Process according to Claim 5, **characterized in that** the heat treatment is carried out over a period of 5 to 25 hours.

7. Process according to one of Claims 1 to 6, **characterized in that** an inert gas comprising one or more of the components argon, helium, nitrogen and carbon dioxide is used as the shielding gas for the heat treatment.

## Revendications

1. Procédé de soudage de pièces en alliages de magnésium, **caractérisé en ce qu'**avant l'opération de soudage proprement dite, les pièces subissent un traitement thermique sous gaz protecteur pour convertir en magnésium et hydrogène l'hydrure de magnésium présent dans les pièces et libérer l'hydrogène.

2. Procédé selon la revendication 1, **caractérisé en ce que** l'on traite thermiquement des pièces en alliage de magnésium corroyé ou en alliage de magnésium coulé.

3. Procédé selon la revendication 1 ou 2, **caractérisé en ce que** l'on traite thermiquement des pièces en alliage de magnésium moulé sous pression.

4. Procédé selon l'une des revendications 1 à 3, **caractérisé en ce que** le traitement thermique est réalisé à une température comprise entre 350 et 600°C.

5. Procédé selon l'une des revendications 1 à 3, **caractérisé en ce que** le traitement thermique est réalisé à une température comprise entre 400 et 550°C.

6. Procédé selon la revendication 5, **caractérisé en ce que** le traitement thermique est réalisé pendant une durée de 5 à 25 heures.

7. Procédé selon l'une des revendications 1 à 6, **caractérisé en ce que** le gaz protecteur utilisé pour le traitement thermique est un gaz inerte qui contient un ou plusieurs des composants argon, hélium, azote et dioxyde de carbone.
